# EUROPEAN PATENT SPECIFICATION

(11) **EP 3 100 976 B1**
(45) Date of publication and mention of the grant of the patent: **26.05.2021**
(21) Application number: 15742812.9
(22) Date of filing: 22.01.2015
(51) Int. Cl.: C01B 3/38, B01J 8/04, B01J 8/02

(54) **HYDROGEN GENERATING APPARATUS**
WASSERSTOFFGENERATOR
APPAREIL DE GÉNÉRATION D'HYDROGÈNE

(30) Priority: 28.01.2014 JP 2014012960
(43) Date of publication of application: 07.12.2016
(73) Proprietor: Panasonic Intellectual Property Management Co., Ltd., Osaka-shi, Osaka 570-6207 (JP)
(72) Inventor: TAKEDA, Kenyu, Osaka 540-6207 (JP)
(74) Representative: Grünecker Patent- und Rechtsanwälte PartG mbB
(86) International application number: PCT/JP2015/000276
(87) International publication number: WO 2015/115071

(56) References cited:
- JP-A- H09 249 402
- JP-A- 2008 120 634
- JP-A- 2008 192 434
- JP-A- 2011 102 223
- JP-A- 2011 136 865
- US-A1- 2006 191 200

## Description

### TECHNICAL FIELD

The present invention relates to a hydrogen generation apparatus that generates a hydrogen-containing gas through a reforming reaction between a raw material gas and water vapor by using a reforming catalyst.

### BACKGROUND ART

A hydrogen generation apparatus as described in the preamble of claim 1 is already known from JP 2011 102 223 A. A fuel cell system, which is small, has high energy efficiency, and is capable of performing power generation and hot-water supply, has been developed as a power generation system of an energy dispersive supply source.

However, a hydrogen gas that becomes fuel during power generation, and a hydrogen-containing gas that contains hydrogen as a main component are not serviced in a typical infrastructure.

Accordingly, for example, a hydrogen generation apparatus, which uses a raw material gas such as city gas and propane gas which contain hydrocarbons and are supplied from an existing fossil fuel infrastructure, and generates a hydrogen-containing gas through a reforming reaction between the raw material gas and water, is arranged in a fuel cell system in combination (for example, refer to PTL 1).

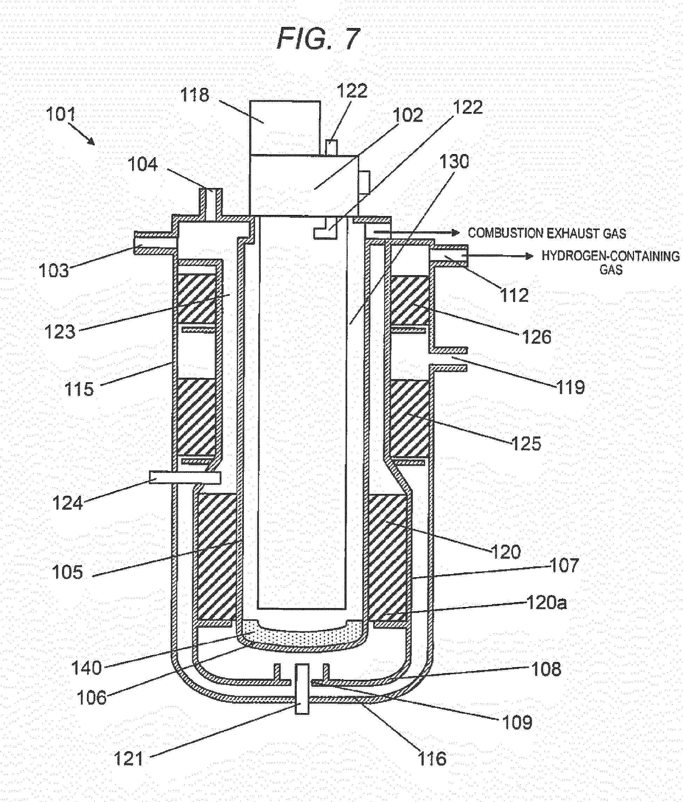

FIG. 7 is a cross-sectional view illustrating a schematic configuration of hydrogen generation apparatus 101 of the related art which is disclosed in PTL 1.

As illustrated in FIG. 7, hydrogen generation apparatus 101 of the related art, which is disclosed in PTL 1, is provided with cylindrical combustion tube 130 below heating unit 102 that combusts fuel. Bottomed cylindrical inner tube 105, which includes inner tube bottom plate 106, is disposed on an outer side of combustion tube 130. Bottomed intermediate tube 107, which includes intermediate tube bottom plate 108, is disposed on an outer side of inner tube 105. Bottomed cylindrical outer tube 115, which includes outer tube bottom plate 116, is disposed on an outer side of intermediate tube 107.

Combustion tube 130, inner tube 105, intermediate tube 107, and outer tube 115 are disposed in a substantially concentric circular shape (including a concentric circular shape) when seen in a plan view (when seen from an upper surface). Upper portions of inner tube 105, intermediate tube 107, and outer tube 115 are appropriately connected to each other to constitute a reactor having a substantially cylindrical shape (including a cylindrical shape).

Through-hole 109 is formed in a central portion of intermediate tube bottom plate 108. Intermediate tube 107 forms a gas flow path (first gas flow path), which folds back in an opposite direction (in FIG. 7, from a lower side to an upper side) partway through the gas flow path (at through-hole 109 in intermediate tube bottom plate 108), by using a space between intermediate tube 107 and inner tube 105, and a space between intermediate tube 107 and outer tube 115.

In addition, in hydrogen generation apparatus 101, raw material supply unit 104, which is connected to an external gas pipeline and supplies a raw material gas to hydrogen generation apparatus 101 (specifically, the space between inner tube 105 and intermediate tube 107), is provided to an external wall surface of hydrogen generation apparatus 101 on a side (in FIG. 7, an upper side) that is opposite to a gas folding-back portion (in FIG. 7, a lower side). In addition, water supply unit 103, which is connected to an external water pipeline and supplies water to hydrogen generation apparatus 101 (specifically, the space between inner tube 105 and intermediate tube 107), is provided to an outer wall surface of hydrogen generation apparatus 101 on an upper side in FIG. 7.

A raw material gas that is supplied from raw material supply unit 104, and water that is supplied from water supply unit 103 flow between inner tube 105 and intermediate tube 107 toward through-hole 109 in intermediate tube bottom plate 108, are heated at preheating unit 123, and are reformed at reforming catalyst section 120 to be a reformed gas. A flowing direction of the reformed gas in through-hole 109 is reversed, and the reformed gas flows between intermediate tube 107 and outer tube 115 toward discharge portion 112, and passes through modification section 125 and selective oxidation section 126. According to this, carbon monoxide in the reformed gas is reduced.

Preheating unit 123 is provided in the space between inner tube 105 and intermediate tube 107. In preheating unit 123, water that is supplied from water supply unit 103 is evaporated and a mixed gas of a raw material gas and water vapor is preheated by using heat that is transferred from a combustion exhaust gas of heating unit 102, which passes through a space between combustion tube 130 and inner tube 105, through inner tube 105.

In addition, at reforming catalyst section 120 that is provided on a downstream side (lower side) of preheating unit 23 in the space between inner tube 105 and intermediate tube 107, the raw material gas and the water vapor are subjected to a reforming reaction with a reforming catalyst by using heat that is transferred from the combustion exhaust gas of heating unit 102, which passes through the space between combustion tube 130 and inner tube 105, through inner tube 105 to generate a reformed gas.

In modification section 125 that is provided between the space between intermediate tube 107 and outer tube 115, carbon monoxide in the reformed gas, which is generated at reforming catalyst section 120, is subjected to a water gas shift reaction with water vapor by using a CO modification catalyst for conversion into carbon dioxide. According to this, the carbon monoxide is reduced.

Selective oxidation section 126, which is provided on a downstream side (upper side) of modification section 125 in the space between intermediate tube 107 and outer tube 115, converts carbon monoxide, which remains in a hydrogen-containing gas after the water gas shift reaction in modification section 125, into carbon dioxide with a selective oxidation catalyst by using air that is supplied from air supply unit 119 to a hydrogen-containing gas after passing through modification section 125.

Reforming catalyst section 120 is provided with an Ru-based reforming catalyst in a spherical shape having a diameter of approximately 3 mm. Specifically, in a space that is constituted by lateral surfaces of inner tube 105 and intermediate tube 107, the reforming catalyst is provided on a tray that is constituted by a punching metal, which has a diameter smaller than the size of the reforming catalyst, that is, a bore diameter of approximately 2 mm, on a lateral surface portion of intermediate tube 107.

In addition, modification section 125 is provided with a Cu-Zn-based CO modification catalyst in a cylindrical shape having a diameter of approximately 3 mm and a height of 3 mm. In addition, selective oxidation section 126 is provided with an Ru-based selective oxidation catalyst in a spherical shape having a diameter of approximately 3 mm.

Here, a side, from which the raw material gas flows into reforming catalyst section 120, is set as an upstream, and a side, from which the reformed gas flows out, is set as a downstream. In addition, a downstream portion of reforming catalyst section 120 is set as reforming catalyst downstream portion 120a.

Hydrogen generation apparatus 101 is provided with heating unit 102, which is configured to supply reaction heat necessary for a reforming reaction in reforming catalyst section 120, on an inner side of inner tube 105. Heating unit 102 includes a burner that combusts a combustion gas that becomes a heating source, combustion detector 122 including a flame rod that detects a combustion state of heating unit 102, and combustion fan 118 as a combustion air supply unit that supplies combustion air to heating unit 102. Furthermore, the flame rod is a device that applies a voltage to an ion that is generated when a flame is formed, and measures an ion current value that flows at that time.

A combustion gas to be combusted in heating unit 102 is supplied to heating unit 102 through a combustion gas supply path. In addition, a hydrogen-containing gas that is generated by hydrogen generation apparatus 101 is supplied to a fuel cell and the like which are provided on an outer side through discharge portion 112.

In addition, reforming catalyst section 120 and preheating unit 123 have a configuration in which heat is supplied thereto from the combustion exhaust gas that is generated in heating unit 102 through a wall surface of inner tube 105 that faces combustion tube 130 of heating unit 102. The combustion exhaust gas passes through the inside (inner side) of combustion tube 130 from heating unit 102, gets out of combustion tube 130, and comes into contact with a lower portion of inner tube 105 and inner tube bottom plate 106 in a high-temperature state. In addition, the combustion exhaust gas passes through a passage that is constituted by an outer peripheral surface of combustion tube 130 and an inner peripheral surface of inner tube 105, and is exhausted from a discharge port on an upper right side in the drawing to the outside of hydrogen generation apparatus 101.

As described above, the combustion exhaust gas comes into contact with inner tube 105 and inner tube bottom plate 106 in a high-temperature state (850°C to 950°C), and thus inner tube 105 and inner tube bottom plate 106 reach a high temperature due to heat of the combustion exhaust gas. Accordingly, there is a possibility that inner tube 105 and inner tube bottom plate 106 may be thermally deformed when being used for a long period of time. Particularly, in a portion that is not filled with a reforming catalyst, heat is not consumed through an endothermic reaction of the reforming catalyst, and thus a tendency of the thermal deformation becomes more significant.

In a case where at least one of inner tube 105 and inner tube bottom plate 106 is thermally deformed, a metal, which constitutes a thermally deformed side between inner tube 105 and inner tube bottom plate 106, is destroyed. In addition, a reformed gas on a high-pressure side is leaked to a combustion exhaust gas path side with the thermally deformed side between inner tube 105 and inner tube bottom plate 106 set as a boundary. In this case, there is a possibility that a fuel cell system may be stopped due to deficiency in a flow rate of the hydrogen-containing gas that is supplied to a fuel cell.

In consideration of the above-described problem, in hydrogen generation apparatus 101 of the related art which is disclosed in PTL 1, heat insulation material 140 is disposed on inner tube bottom plate 106 at a position that faces heating unit 102. According to this, it is possible to prevent a portion, which is not filled with the reforming catalyst, in inner tube bottom plate 106 and inner tube 105 from reaching a high temperature. Furthermore, SUS310S material, in which a proportion of nickel is great and which is strong against high-temperature thermal deformation, is used in inner tube bottom plate 106 and inner tube 105 for safety.

In addition, hydrogen generation apparatus 101 is provided with a reforming temperature detector 121 that detects a temperature of a reforming catalyst in reforming catalyst section 120, and a modification temperature detector 124 that detects a temperature of a CO modification catalyst in modification section 125 so as to control an operation of hydrogen generation apparatus 101.

As described above, in a configuration of hydrogen generation apparatus 101 of the related art which is disclosed in PTL 1, heat insulation material 140 is disposed with respect to a portion that is not filled with a reforming catalyst at a downstream portion of reforming catalyst section 120. That is, heat insulation material 140, which is configured to suppress heat transfer to the downstream portion of reforming catalyst section 120, is not disposed. Accordingly, it is difficult to prevent the reforming catalyst from reaching a high temperature.

Furthermore, in hydrogen generation apparatus 101 of the related art, a temperature necessary for a catalyst reaction and a threshold temperature for retention of durability of a metal that constitutes inner tube 105 are approximately equal to 600°C to 700°C.

Here, a case is assumed where it is necessary to reduce the amount of a reforming catalyst from a request such as a reduction in size and cost. In this case, it is necessary to further raise a catalyst temperature from a catalyst temperature in the related art so as to obtain a sufficient amount of hydrogen-containing gas. In this case, a temperature of a structure body further rises in comparison to the related art, and thus the temperature exceeds a threshold temperature capable of retaining durability, and inner tube 105 is subjected to thermal deformation, high-temperature oxidation, and the like. Accordingly, there is a concern that an operational lifetime of hydrogen generation apparatus 101 may be shortened. In the related art, a countermeasure for the above-described problem is not considered at all.

### Citation List

### Patent Literature

PTL 1: Japanese Patent Unexamined Publication No. 2011-102223

### SUMMARY OF INVENTION

The invention has been made in consideration of the above-described problem, and an object thereof is to provide a hydrogen generation apparatus that is excellent in durability even when reducing the amount of a reforming catalyst.

The above and other objects of the invention are achieved by the hydrogen generation apparatus according to claim 1. Preferred embodiments are claimed in the dependent claims.

According to the configuration, since the heat transfer suppressing unit is provided, it is possible to prevent a downstream portion including a downstream-side end of a reforming catalyst in a gas flow direction from being heated more than necessary due to heat transfer from a combustion exhaust gas. Accordingly, it is possible to realize a hydrogen generation apparatus in which a reduction in cost is attained by reducing the amount of an expensive reforming catalyst without the occurrence of a problem related to durability.

### BRIEF DESCRIPTION OF DRAWINGS

FIG. 1 is a cross-sectional view illustrating a configuration of a main portion of a hydrogen generation apparatus according to an exemplary embodiment of the invention.
FIG. 2A is a view illustrating temperature variation characteristics of a reforming catalyst section, in which a reforming catalyst is heated by heat transfer from a combustion exhaust gas over the entire region from an upstream portion to a downstream portion thereof, in a raw material gas flow direction in a hydrogen generation apparatus of a comparative example.
FIG. 2B is a view illustrating variation characteristics of a conversion ratio (value indicating that a raw material gas is converted to hydrogen to a certain extent) of a gas, which is passing through the reforming catalyst section in which the reforming catalyst is heated by heat transfer from the combustion exhaust gas over the entire region from an upstream portion to a downstream portion thereof, in a gas flow direction in the hydrogen generation apparatus of the comparative example.
FIG. 3A is a view illustrating the temperature variation characteristics of the reforming catalyst section in the raw material gas flow direction in the hydrogen generation apparatus of the comparative example in a case where the amount of the reforming catalyst is reduced by half.
FIG. 3B is a view illustrating variation characteristics in a conversion ratio of a gas, which is passing through the reforming catalyst section, in a gas flow direction in the hydrogen generation apparatus of the comparative example in a case where the amount of the reforming catalyst is reduced by half.
FIG. 4A is a view illustrating temperature variation characteristics of a reforming catalyst section in a raw material gas flow direction in a hydrogen generation apparatus according to an exemplary embodiment of the invention.
FIG. 4B is a view illustrating variation characteristics of a conversion ratio of a gas, which is passing through the reforming catalyst section, in a gas flow direction in the hydrogen generation apparatus according to the exemplary embodiment of the invention.
FIG. 5 is a view illustrating an additional configuration of the hydrogen generation apparatus according to the exemplary embodiment of the invention.
FIG. 6 is a view illustrating a schematic configuration of a hydrogen generation apparatus according to an example which does not form part of the invention but is useful for understanding the invention.
FIG. 7 is a cross-sectional view illustrating a schematic configuration of a hydrogen generation apparatus of the related art which is disclosed in PTL 1.

### DESCRIPTION OF EMBODIMENT AND EXAMPLE

Hereinafter, description will be given of an exemplary embodiment of a hydrogen generation apparatus of the invention with reference to the accompanying drawings. Furthermore, the invention is not limited by the exemplary embodiment.

### (Exemplary Embodiment)

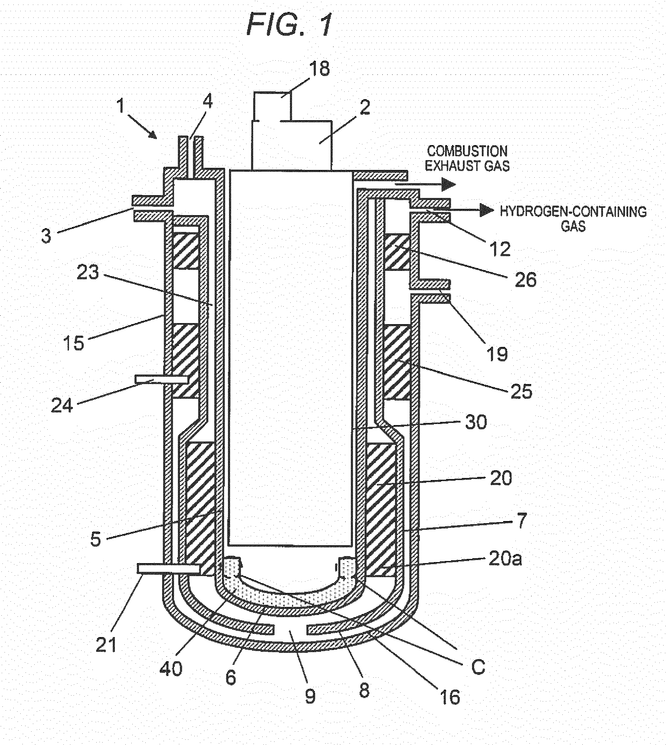

FIG. 1 is a cross-sectional view illustrating a configuration of a main portion of hydrogen generation apparatus 1 according to the exemplary embodiment of the invention.

As illustrated in FIG. 1, hydrogen generation apparatus 1 according to this exemplary embodiment is provided with cylindrical combustion tube 30 below heating unit 2 that is a combustor configured to combust fuel. Bottomed cylindrical inner tube 5 including inner tube bottom plate 6 is disposed on an outer side of cylindrical combustion tube 30. Bottomed cylindrical intermediate tube 7 including intermediate tube bottom plate 8 is disposed on an outer side of inner tube 5. Bottomed cylindrical outer tube 15 including outer tube bottom plate 16 is disposed on an outer side of intermediate tube 7.

Combustion tube 30, inner tube 5, intermediate tube 7, and outer tube 15 are disposed in a substantially concentric shape (including a concentric shape) when seen in a plan view. Upper portions of inner tube 5, intermediate tube 7, and outer tube 15 are appropriately connected to each other to constitute a reactor having a substantially cylindrical shape (including a cylindrical shape).

Through-hole 9 is formed in the central portion of intermediate tube bottom plate 8. Intermediate tube 7 forms a gas flow path (first gas flow path) which folds back in an opposite direction (in FIG. 1, from a lower side to an upper side) partway through the gas flow path (at through-hole 9 of intermediate tube bottom plate 8) and which is formed by using a space between intermediate tube 7 and inner tube 5 and a space between intermediate tube 7 and outer tube 15.

In addition, in hydrogen generation apparatus 1, raw material supply unit 4, which is connected to an external gas pipeline and supplies a raw material gas to hydrogen generation apparatus 1 (the space between inner tube 5 and intermediate tube 7), is provided to an external wall surface of hydrogen generation apparatus 1 on a side (in FIG. 1, an upper side) that is opposite to a gas folding-back portion side (in FIG. 1, a lower side). In addition, water supply unit 3, which is connected to an external water pipeline and supplies water to hydrogen generation apparatus 1 (the space between inner tube 5 and intermediate tube 7), is provided to an outer wall surface of hydrogen generation apparatus 1.

In addition, a raw material gas that is supplied from raw material supply unit 4, and water that is supplied from water supply unit 3 flow between inner tube 5 and intermediate tube 7 toward through-hole 9 in intermediate tube bottom plate 8, are heated at preheating unit 23, and are reformed at reforming catalyst section 20 to be a reformed gas. A flowing direction of the reformed gas in through-hole 9 is reversed, and the reformed gas flows between intermediate tube 7 and outer tube 15 toward discharge portion 12, and passes through modification section 25 and selective oxidation section 26. According to this, carbon monoxide in the reformed gas is reduced.

In preheating unit 23 that is provided in the space between inner tube 5 and intermediate tube 7, water that is supplied from water supply unit 3 is evaporated and a mixed gas of a raw material gas and water vapor is preheated by using heat that is transferred from a combustion exhaust gas (heated gas) of heating unit 2, which passes through a space between combustion tube 30 and inner tube 5, through inner tube 5.

Reforming catalyst section 20 is provided in the space between inner tube 5 and intermediate tube 7 on a downstream side (lower side) of preheating unit 23. In reforming catalyst section 20, heat, which is transferred from the combustion exhaust gas (heated gas) of heating unit 2 through inner tube 5, is used. The combustion exhaust gas passes through the space between combustion tube 30 and inner tube 5. A raw material gas and water vapor are subjected to a reforming reaction with a reforming catalyst to generate a reformed gas.

In modification section 25 that is provided in the space between intermediate tube 7 and outer tube 15, carbon monoxide in the reformed gas, which is generated at reforming catalyst section 20, is subjected to a water gas shift reaction with water vapor by using a CO modification catalyst for conversion into carbon dioxide. According to this, the carbon monoxide is reduced.

Selective oxidation section 26 is provided in the space between intermediate tube 7 and outer tube 15 on a downstream side (upper side) of modification section 25. In selective oxidation section 26, carbon monoxide, which remains in a hydrogen-containing gas after the water gas shift reaction in modification section 25, can be converted into carbon dioxide with a selective oxidation catalyst by using air that is supplied from air supply unit 19 to a hydrogen-containing gas after passing through modification section 25.

Reforming catalyst section 20 is provided with an Ru-based reforming catalyst in a spherical shape having a diameter of approximately 3 mm. Specifically, in a space that is constituted by lateral surfaces of inner tube 5 and intermediate tube 7, the reforming catalyst is provided on a tray that is constituted by a punching metal, which has a diameter smaller than the size of the reforming catalyst, that is, a bore diameter of approximately 2 mm, on a lateral surface portion of intermediate tube 7.

In addition, modification section 25 is provided with a Cu-Zn-based CO modification catalyst in a cylindrical shape having a diameter of approximately 3 mm and a height of 3 mm. In addition, selective oxidation section 26 is provided with an Ru-based selective oxidation catalyst in a spherical shape having a diameter of approximately 3 mm.

Here, in reforming catalyst section 20, a side, into which the reformed gas flows, is set as an upstream, and a side, from which the reformed gas flows out, is set as a downstream. In addition, a downstream portion, from which the reformed gas flows out, is set as reforming catalyst downstream portion 20a.

Hydrogen generation apparatus 1 is provided with heating unit 2, which is configured to supply reaction heat necessary for a reforming reaction in reforming catalyst section 20, on an inner side of inner tube 5. Furthermore, in this exemplary embodiment, description has been made by using a combustor as an example of heating unit 2, but the heating unit of the invention is not limited thereto. In addition, any configuration can be used as long as reaction heat necessary for a reforming reaction in reforming catalyst section 20 can be supplied. For example, heating unit 2 may be an electric heater. In addition, description has been made by using a combustion exhaust gas that is discharged from the combustor as a heated gas that supplies the reaction heat necessary for the reforming reaction, but the invention is not limited to the example, and various gases can be used as the heated gas in accordance with a configuration of heating unit 2.

Heating unit 2 includes a burner that combusts a combustion gas that becomes a heating source, a combustion detector including a flame rod that detects a combustion state of heating unit 2, and combustion fan 18 as a combustion air supply unit that supplies combustion air to heating unit 2. Furthermore, the flame rod is a device that applies a voltage to an ion that is generated when a flame is formed, and measures an ion current value that flows at that time.

A combustion gas to be combusted in heating unit 2 is supplied to heating unit 2 through a combustion gas supply path. In addition, a hydrogen-containing gas that is generated by hydrogen generation apparatus 1 is supplied to a fuel cell and the like which are provided on an outer side through discharge portion 12.

Reforming catalyst section 20 and preheating unit 23 have a configuration in which heat is supplied thereto from the combustion exhaust gas that is generated in heating unit 2 through a wall surface of inner tube 5 that faces combustion tube 30 of heating unit 2. The combustion exhaust gas passes through the inside (inner side) of combustion tube 30 from heating unit 2, gets out of combustion tube 30, and comes into contact with a lower portion of inner tube 5 and inner tube bottom plate 6 in a high-temperature state. In addition, the combustion exhaust gas passes through a passage that is constituted by an outer peripheral surface of combustion tube 30 and an inner peripheral surface of inner tube 5, and is exhausted from a discharge port on an upper right side in the drawing to the outside of hydrogen generation apparatus 1.

The combustion exhaust gas comes into contact with inner tube 5 in a high-temperature state (850°C to 950°C), and heats reforming catalyst section 20 through inner tube 5. However, to secure a predetermined amount of hydrogen necessary in a fuel cell system, a temperature of reforming catalyst downstream portion 20a is adjusted to a first temperature (for example, 600°C) so that a conversion ratio of a reformed gas at an outlet of reforming catalyst section 20 becomes a predetermined first conversion ratio (for example, 85%). The upper limit of the conversion ratio is determined in accordance with a catalyst temperature, and when the temperature is high, the upper limit tends to rise.

Here, in a case where the conversion ratio at the outlet of reforming catalyst section 20 is approximately equal to the conversion ratio upper limit at a corresponding temperature, the temperature of reforming catalyst downstream portion 20a so as to set the conversion ratio to the first conversion ratio is determined as the first temperature, and thus it is possible to avoid a problem such as deformation by appropriately selecting a material of inner tube 5 and inner tube bottom plate 6.

On the other hand, in a case where reforming catalyst section 20 is made to be smaller and the amount of a catalyst is reduced from a request such as a reduction in cost, the conversion ratio at the outlet of reforming catalyst section 20 becomes a value that is lower than the conversion ratio upper limit at a corresponding temperature (details thereof will be described later). According to this, in a case where the conversion ratio at the outlet of reforming catalyst section 20 is retained to the first conversion ratio, the temperature of reforming catalyst downstream portion 20a excessively rises. As a result, inner tube 5 and inner tube bottom plate 6 at the periphery of reforming catalyst downstream portion 20a tend to be thermally deformed.

In a case where at least one of inner tube 5 and inner tube bottom plate 6 is thermally deformed, a metal, which constitutes a thermally deformed portion, is destroyed. Therefore, a reformed gas on a high-pressure side is leaked to a combustion exhaust gas path side with the portion set as a boundary. In this case, there is a possibility that a fuel cell system may be stopped due to deficiency in a flow rate of the hydrogen-containing gas that is supplied to a fuel cell.

Here, temperature rising in reforming catalyst section 20 will be described in detail while making a comparison with a comparative example. Here, description will be made by using hydrogen generation apparatus 101 of the related art, which is illustrated in FIG. 7, as the comparative example.

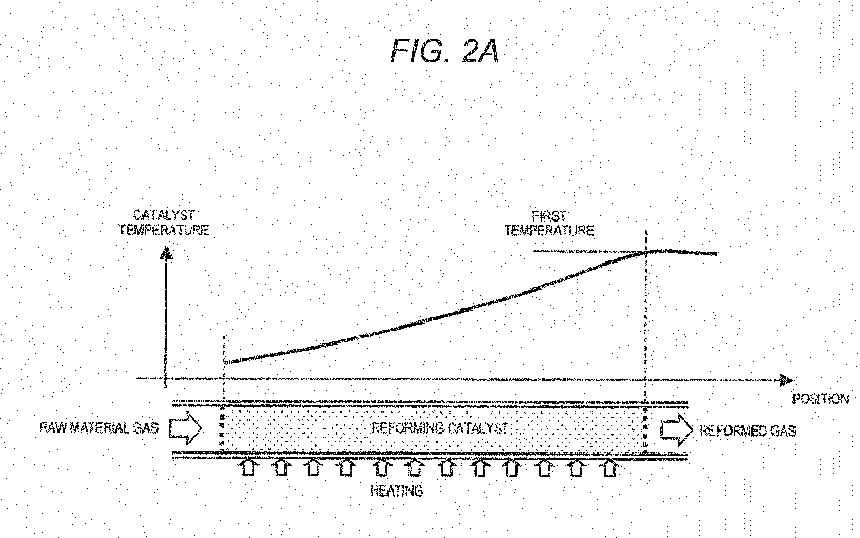

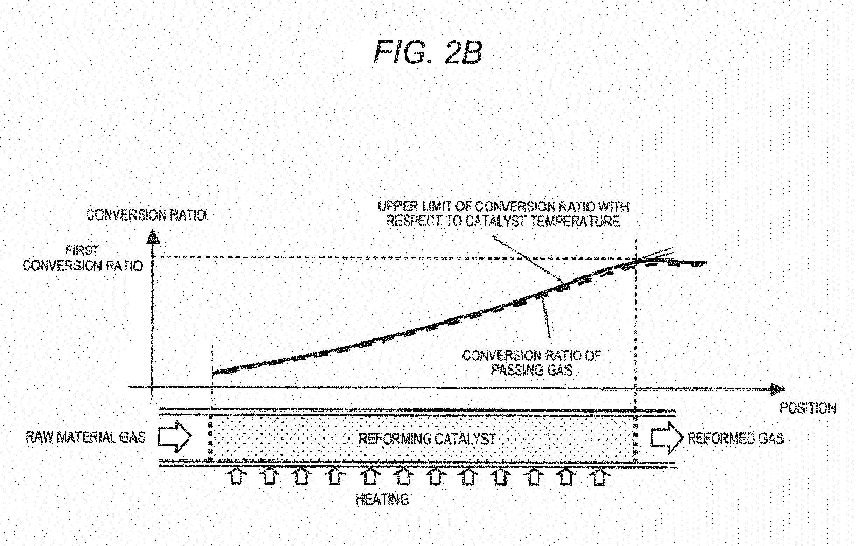

FIG. 2A is a view illustrating temperature variation characteristics of reforming catalyst section 120, in which a reforming catalyst is heated by heat transfer from a combustion exhaust gas over the entire region from an upstream portion to a downstream portion thereof, in a raw material gas flow direction in hydrogen generation apparatus 101 of the comparative example. FIG. 2B is a view illustrating variation characteristics of a conversion ratio (value indicating that a raw material gas is converted to hydrogen to a certain extent) of a gas, which is passing through reforming catalyst section 120 in which the reforming catalyst is heated by heat transfer from the combustion exhaust gas over the entire region from an upstream portion to a downstream portion thereof, in a gas flow direction in hydrogen generation apparatus 101 of the comparative example.

In the comparative example, as illustrated in FIG. 2A, the temperature of the reforming catalyst that is heated has a temperature distribution in which the temperature gradually rises from an inlet portion into which the raw material gas flows toward an outlet portion from which a reformed gas generated through a reforming reaction flows out.

On the other hand, as illustrated in FIG. 2B, a conversion ratio of a gas, which is passing through reforming catalyst section 120, has characteristics in which the upper limit of the conversion ratio increases as the temperature rises. Accordingly, so as to generate hydrogen gas in an amount that is required by a fuel cell system, an operation of hydrogen generation apparatus 101 is performed after adjusting a temperature at the outlet of reforming catalyst section 120 to a first temperature (for example, 600°C) so that the conversion ratio of the reformed gas that flows out from reforming catalyst section 120 becomes a first conversion ratio (for example, 85%) that is necessary.

At this time, a reaction progress rate in reforming catalyst section 120 is sufficiently faster than a flow rate of the gas that passes therethrough, and thus the conversion ratio of the reformed gas, which flows out from reforming catalyst section 120, is set to be approximately the same as the upper limit with respect to an approximate temperature (as illustrated in FIG. 2B, a difference from the upper limit hardly occurs).

Here, as a method conforming to a request for a reduction in size and cost of hydrogen generation apparatus 101, it is considered that the amount of the reforming catalyst is reduced. However, in a case where the amount of the reforming catalyst is reduced, with respect to a conversion ratio of a reformed gas in accordance with generation of a hydrogen gas in an amount that is required by a fuel cell system, the temperature of reforming catalyst section 120 deviates in a high-temperature direction.

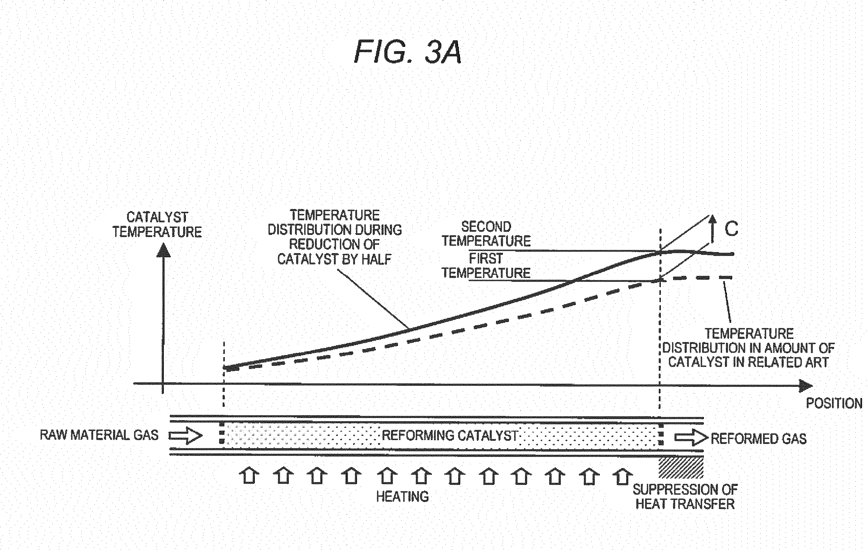

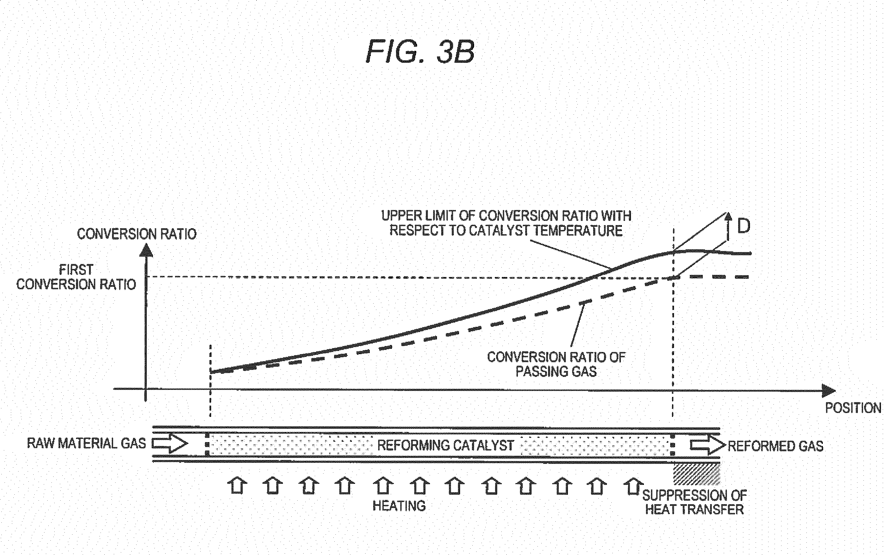

FIG. 3A is a view illustrating the temperature variation characteristics of reforming catalyst section 120 in the raw material gas flow direction in hydrogen generation apparatus 101 of the comparative example in a case where the amount of the reforming catalyst is reduced by half. In addition, FIG. 3B is a view illustrating variation characteristics in a conversion ratio of a gas, which is passing through reforming catalyst section 120, in a gas flow direction in hydrogen generation apparatus 101 of the comparative example in a case where the amount of the reforming catalyst is reduced by half.

Here, it is assumed that a first conversion ratio and a first temperature in FIG. 3A and FIG. 3B indicate the same values as the first conversion ratio and the first temperature in FIG. 2A and FIG. 2B.

As illustrated in FIG. 3A and 3B, in a case where the amount of the reforming catalyst in reforming catalyst section 120 is reduced by half, the amount of the reforming catalyst becomes smaller with respect to the amount of the raw material gas that is allowed to flow therethrough. Accordingly, time necessary for the raw material gas to pass through the reforming catalyst is relatively shortened. According to this, as illustrated in FIG. 3B, the conversion ratio of a passing gas does not reach the upper limit of the conversion ratio with respect to a temperature of each portion, and it enters a state in which a reaction is not completed (according to this, as indicated by an arrow D on a right end in FIG. 3B, it is necessary to further raise the conversion ratio upper limit so as to retain the conversion ratio of the reformed gas that flows out).

In this situation, it is necessary to retain the conversion ratio of the reformed gas, which flows out, to the first conversion ratio (refer to FIG. 3B) so as to retain the amount of hydrogen contained in the reformed gas to an amount that is required by a fuel cell system. However, as illustrated in FIG. 3A, it is necessary to set a temperature of a reforming catalyst outlet to a second temperature (for example, 700°C) that is higher than the first temperature so as to set the conversion ratio of the reformed gas to the first conversion ratio (as indicated by an arrow C in FIG. 3A, a temperature of a reforming catalyst outlet portion is raised so as to raise the conversion ratio upper limit).

Next, description will be given of an operation of a heat transfer suppressing unit in reforming catalyst section 20 of hydrogen generation apparatus 1 according to this exemplary embodiment.

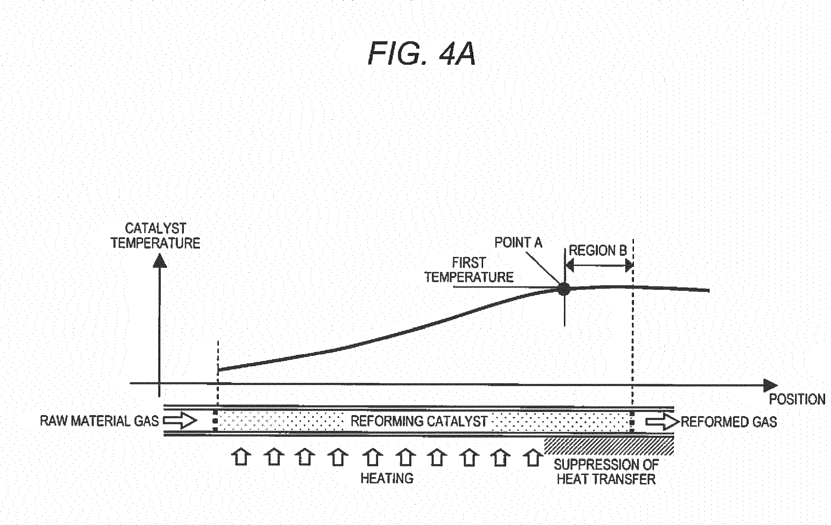

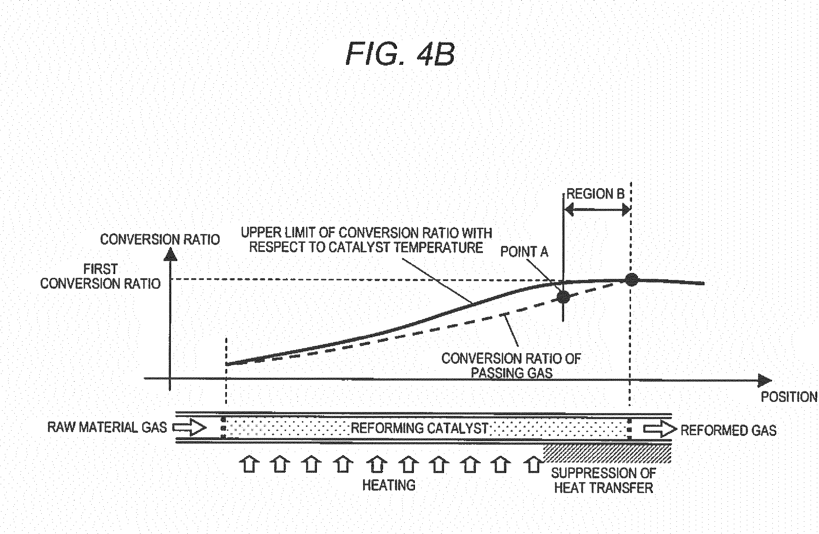

FIG. 4A is a view illustrating temperature variation characteristics of reforming catalyst section 20 in a raw material gas flow direction in hydrogen generation apparatus 1 according to an exemplary embodiment of the invention. FIG. 4B is a view illustrating variation characteristics of a conversion ratio of a gas, which is passing through reforming catalyst section 20, in a gas flow direction in hydrogen generation apparatus 1.

Here, it is assumed that a first temperature and a first conversion ratio in FIG. 4A and FIG. 4B indicate the same values as the first temperature and the first conversion ratio in FIG. 2A, FIG. 2B, FIG. 3A, and FIG. 3B.

In hydrogen generation apparatus 1 of this exemplary embodiment, heat insulation material 40 as the heat transfer suppressing unit is also disposed at a position (refer to region C in FIG. 1), which faces reforming catalyst downstream portion 20a including a lower end of reforming catalyst section 20, on a surface of inner tube 5 on heating unit 2 (combustion tube 30) side in addition to a surface of inner tube bottom plate 6 on heating unit 2 (combustion tube 30) side and a surface of inner tube 5 on heating unit 2 (combustion tube 30) side downstream (on a lower side) of the lower end of reforming catalyst section 20. Heat insulation material 40 is composed of ceramic fiber and can endure a temperature of 1,000°C or lower. According to this, it is possible to suppress a temperature rise toward an outlet of reforming catalyst section 20 to be low from the viewpoint of suppression of heat transfer from the combustion exhaust gas.

Furthermore, in this exemplary embodiment, the length of reforming catalyst downstream portion 20a, which is protected by the heat transfer suppressing unit, is not limited, and may be appropriately set in accordance with a target temperature gradient in a catalyst temperature, a material and the thickness of heat insulation material 40, and the like. When heat insulation material 40 is disposed as much as possible at a portion that faces reforming catalyst section 20, it is possible to exhibit a heat transfer suppressing effect.

In addition, in hydrogen generation apparatus 101 of the related art, a reduction in the amount of the reforming catalyst is not considered. Therefore, there is a problem in how effectively heat is applied from the heated gas to the reforming catalyst in reforming catalyst section 20. As a result, there is no consideration of disposing the heat transfer suppressing unit such as heat insulation material 40 at a heated gas side portion that faces reforming catalyst section 20.

As described above, according to hydrogen generation apparatus 1, as illustrated in FIG. 4A, it is possible to provide region B, which is constant at approximately the first temperature, in the vicinity of reforming catalyst downstream portion 20a. At this time, at point A at which a temperature reaches the first temperature in FIG. 3A, a conversion ratio of a passing gas does not reach the first conversion ratio (refer to FIG. 4B). However, during a period in which the raw material gas passes through region B (a constant-temperature region) in FIG. 4B, a reforming reaction progresses, and thus the conversion ratio of the reformed gas reaches the first conversion ratio at a point of time at which the reformed gas flows out from the outlet of reforming catalyst section 20 (refer to FIG. 4B). According to this, the amount of a hydrogen gas in a hydrogen-containing gas, which is transmitted from hydrogen generation apparatus 1, can be retained in the same amount as in the related art.

Furthermore, in the example illustrated in FIG. 4A, description has been made by using an example in which the heat transfer suppressing unit is disposed, and thus a region (region B), in which the catalyst temperature is retained at a constant temperature after the catalyst temperature is raised to a predetermined first temperature (point A), is provided. However, the invention is not limited to this example. For example, the invention also includes a configuration in which a heat transfer suppressing unit is disposed to make a temperature gradient on an outlet side of the reformed gas smaller (that is, duller) than a temperature gradient on an inlet side of the raw material gas.

As described above, hydrogen generation apparatus 1 of this exemplary embodiment includes heating unit 2. In addition, in hydrogen generation apparatus 1, the reforming catalyst is disposed in reforming catalyst section 20, and the raw material gas flows into reforming catalyst section 20 (the reforming catalyst therein). In addition, hydrogen generation apparatus 1 is provided with inner tube 5 that functions as a wall that partitions a first gas flow path through which the reformed gas from reforming catalyst section 20 (reforming catalyst therein) flows out, and an exhaust gas flow path (second gas flow path) through which a combustion exhaust gas (heated gas) generated due to heating by heating unit 2 flows. Hydrogen generation apparatus 1 heats the reforming catalyst in reforming catalyst section 20 by using heat, which is transferred through inner tube 5, of the combustion exhaust gas. In addition, hydrogen generation apparatus 1 is provided with the heat transfer suppressing unit (heat insulation material 40 that is provided on a surface of inner tube 5 on a heated gas side which faces at least a position of reforming catalyst downstream portion 20a) that suppresses heat transfer from the heated gas to the downstream portion (reforming catalyst downstream portion 20a) including the downstream-side end in a flow direction of the reformed gas in reforming catalyst section 20.

According to the configuration as described above, in small-sized and low-cost hydrogen generation apparatus 1 in which the amount of the expensive reforming catalyst is reduced, it is possible to suppress temperature rise in reforming catalyst downstream portion 20a. Accordingly, it is possible to avoid shortening of the lifetime of hydrogen generation apparatus 1 due to a high temperature of inner tube bottom plate 6 and inner tube 5. In addition, it is possible to avoid a decrease in the conversion ratio of the reformed gas while suppressing a temperature rise in reforming catalyst downstream portion 20a, and it is possible to perform generation of hydrogen without reducing the amount of the hydrogen gas in the hydrogen-containing gas. Furthermore, at this time, the conversion ratio at the outlet of reforming catalyst section 20 is approximately equal to the upper limit of the conversion ratio with respect to a temperature of the outlet (refer to FIG. 4B).

In addition, as illustrated in FIG. 1, hydrogen generation apparatus 1 includes reforming temperature detector 21 that detects a temperature of the reforming catalyst in reforming catalyst section 20 to control an operation, and modification temperature detector 24 that detects a temperature of a CO modification catalyst in modification section 25.

Here, determination of whether or not the amount of the hydrogen gas, which is included in the reformed gas generated in hydrogen generation apparatus 1, reaches an appropriate amount is made in accordance with a catalyst temperature, which is detected by reforming temperature detector 21, in reforming catalyst downstream portion 20a. At this time, a conversion ratio in reforming catalyst downstream portion 20a is approximately equal to the upper limit of a conversion ratio with respect to a temperature of reforming catalyst downstream portion 20a, and thus it is possible to estimate the amount of the hydrogen gas with high accuracy through the temperature detection. As a result, it is possible to control the entirety of a fuel cell system with high accuracy.

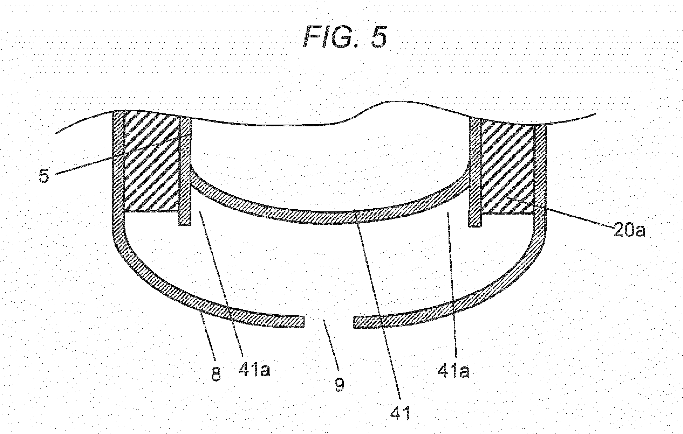

Furthermore, as a configuration of the heat transfer suppressing unit that prevents the temperature of reforming catalyst downstream portion 20a and the temperature of inner tube 5 and inner tube bottom plate 6 from rising, as illustrated in FIG. 5, combustion exhaust gas blocking unit 41, which forms space 41a between an exhaust gas flow path (second gas flow path) and a gas flow path (first gas flow path) of reforming catalyst downstream portion 20a, may be provided instead of disposing heat insulation material 40.

FIG. 5 is a view illustrating an additional configuration of hydrogen generation apparatus 1 according to the exemplary embodiment of the invention.

Combustion exhaust gas blocking unit 41 illustrated in FIG. 5 has a configuration that is connected to inner tube 5 on an upper side (upstream) of reforming catalyst downstream portion 20a to close a lower opening of inner tube 5 instead of inner tube bottom plate 6 that is connected to a lower end of inner tube 5 to close the lower opening of inner tube 5. Furthermore, the heat transfer suppressing unit of the invention is not limited to this example, and space 41a may be formed, for example, by providing hollow cylindrical combustion exhaust gas blocking unit 41 in addition to inner tube bottom plate 6.

When providing combustion exhaust gas blocking unit 41 having the above described configuration, it is also possible to realize a configuration in which the combustion exhaust gas does not come into contact with inner tube 5 in the vicinity of reforming catalyst downstream portion 20a. According to this, reforming catalyst downstream portion 20a is not directly heated by the combustion exhaust gas, and thus it is possible to suppress heat transfer from the combustion exhaust gas to reforming catalyst downstream portion 20a.

Returning to FIG. 1, in hydrogen generation apparatus 1 of this exemplary embodiment, preheating unit 23 is provided to share a single-side wall surface (intermediate tube 8) with discharge portion 12, and a carbon monoxide reducing section (selective oxidation section 26 and modification section 25). Preheating unit 23 has a configuration capable of performing heat exchange with a hydrogen-containing gas that flows through discharge portion 12 and the carbon monoxide reducing section, and a catalyst that is provided in selective oxidation section 26 and modification section 25.

A raw material gas, which is supplied from raw material supply unit 4, may be a raw material gas including an organic compound such as hydrocarbon that contains at least carbon and hydrogen elements. For example, city gas and natural gas which include methane as a main component, LPG, and the like can be used as the raw material gas.

Here, it is assumed that a gas infrastructure line of the city gas is used as a supply source of the raw material gas, and a desulfurizing unit, which removes a sulfur compound that is an odorization component in the raw material gas, is connected to the gas infrastructure line. For example, a zeolite-based adsorption remover, which adsorbs a sulfur compound that is the odorization component in city gas, can be used as the desulfurizing unit.

Furthermore, a buster pump can be used as water supply unit 3 and raw material supply unit 4. For example, it is assumed that the buster pump has a function of adjusting a flow rate of water that is supplied, and a flow rate of the raw material gas by controlling an input current pulse, an input power, and the like.

Furthermore, in hydrogen generation apparatus 1, a microporous-based heat insulation material (for example, a heat insulation material that is a material having low heat conductivity such as WDS and Microtherm (product names) (registered trademarks)) is provided to come into close contact with outer tube 15 and outer tube bottom plate 16.

### (Example)

Next, description will be given of an example which does not form part of the invention but is useful for understanding the invention.

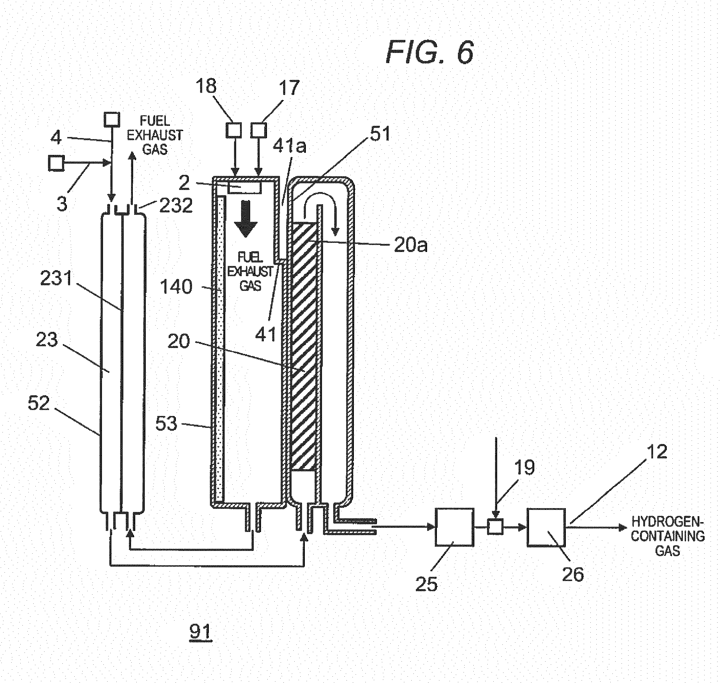

FIG. 6 is a view illustrating a schematic configuration of hydrogen generation apparatus 91 according to the example.

As illustrated in FIG. 6, hydrogen generation apparatus 91 of this example is constituted by a plurality of containers having a flat plate shape. Hydrogen generation apparatus 91 includes at least reforming section container 51, preheating unit container 52, combustion container 53, modification section 25, and selective oxidation section 26.

Hydrogen generation apparatus 91 of this example includes preheating unit 23 that evaporates water supplied from water supply unit 3 and preheats a mixed gas of a raw material gas and water vapor. In addition, hydrogen generation apparatus 91 includes reforming catalyst section 20 that allows a reforming reaction of the raw material gas supplied from raw material supply unit 4 and water vapor to progress, and modification section 25 that subjects carbon monoxide and water vapor in a reformed gas generated in reforming catalyst section 20 to a modification reaction (shift reaction) so as to reduce the concentration of carbon monoxide in the reformed gas.

In addition, hydrogen generation apparatus 91 includes selective oxidation section 26 that removes carbon monoxide, which remains in a hydrogen-containing gas after passing through modification section 25, mainly through oxidation by using air that is supplied from air supply unit 19 to the hydrogen-containing gas after passing through modification section 25. Furthermore, carbon monoxide reducing section is constituted by modification section 25 and selective oxidation section 26.

Reforming catalyst section 20 is provided with an Ru-based reforming catalyst in a spherical shape having a diameter of approximately 3 mm. In addition, modification section 25 is provided with a Cu-Zn-based CO modification catalyst in a cylindrical shape having a diameter of approximately 3 mm and a height of 3 mm, and selective oxidation section 26 is provided with an Ru-based selective oxidation catalyst having a spherical shape having a diameter of approximately 3 mm. A side (a lower side in FIG. 6), from which a reformed gas flows into reforming catalyst section 20, is set as an upstream, and a side (an upper side in FIG. 6), from which a reformed gas flows out, is set as a downstream. In addition, a downstream portion, from which the reformed gas flows out, of reforming catalyst section 20 is set as reforming catalyst downstream portion 20a.

In addition, hydrogen generation apparatus 1 is provided with heating unit 2, which supplies reaction heat necessary for a reforming reaction in reforming catalyst section 20, on an upper side of combustion container 53. Heating unit 2 is a combustor including a burner that combusts a combustion gas as a heating source. Fuel air is supplied to heating unit 2 from combustion fan 18 as a combustion air supply unit, and fuel is supplied to heating unit 2 from fuel supply unit 17.

A hydrogen-containing gas, which is generated by hydrogen generation apparatus 91 having the above-described configuration, is supplied from discharge portion 12 to a fuel cell and the like which are provided on an outer side and is used for power generation in the fuel cell.

Heat of a combustion exhaust gas, which is a heated gas generated in heating unit 2, is supplied to reforming catalyst section 20 of hydrogen generation apparatus 91 through a wall surface at which reforming section container 51 and combustion container 53 come into contact with each other. The combustion exhaust gas comes into contact with an inner surface of combustion container 53 in a high-temperature state from heating unit 2, flows out from combustion container 53, and is additionally introduced into preheating unit container 52. In addition, the combustion exhaust gas supplies heat to water and a mixed gas of a raw material gas and water vapor through preheating unit heat transfer wall 231, the water and the mixing gas flowing through preheating unit 23. In addition, the combustion exhaust gas is exhausted from combustion exhaust gas output 232 on an upper side of preheating unit container 52 to an outer side of hydrogen generation apparatus 91. Furthermore, in this example, heat insulation material 140 is provided on a side of combustion container 53 which is opposite to reforming section container 51, and does not function as the heat transfer suppressing unit.

Here, the combustion exhaust gas comes into contact with the inner surface of combustion container 53 in a high-temperature state (850°C to 950°C), and heats reforming catalyst section 20 through the wall surface at which reforming section container 51 and combustion container 53 come into contact with each other. However, in a case where reforming catalyst section 20 is made to be smaller and the amount of a catalyst is reduced, so as to secure a predetermined amount of hydrogen necessary for a fuel cell system, a temperature of reforming catalyst downstream portion 20a may excessively rise due to the same reason as in the exemplary embodiment. In addition, reforming section container 51 and combustion container 53 in the vicinity of reforming catalyst downstream portion 20a tend to be thermally deformed.

When reforming section container 51 is thermally deformed, a metal that constitutes reforming section container 51 is destroyed. Therefore, there is a possibility that a reformed gas on a side, at which a pressure is higher than the atmosphere, may be leaked to the outside of a path with reforming section container 51 set as a boundary. In addition, at this time, there is a possibility that a flow rate of the hydrogen-containing gas that is supplied to the fuel cell becomes deficient, and thus the fuel cell system is stopped.

With regard to the above-described problem, in this example, combustion exhaust gas blocking unit 41, which is a groove-shaped concave portion, is provided to a portion of combustion container 53 which faces reforming catalyst downstream portion 20a. Specifically, heat transfer from the combustion exhaust gas to reforming catalyst downstream portion 20a is suppressed due to space 41a that is formed by combustion exhaust gas blocking unit 41 that is provided between combustion exhaust gas blocking unit 41 and reforming section container 51. According to this, it is possible to suppress a temperature rise toward an outlet of reforming catalyst section 20 to be low. Furthermore, heat insulation material 40 may be provided at a position of space 41a, and heat insulation material 40 may be provided instead of space 41a. In addition, space 41a may have any shape as long as a configuration, in which the combustion exhaust gas does not come into contact with inner tube 5 in the vicinity of reforming catalyst downstream portion 20a, can be realized.

According to the above-described configuration, as illustrated in FIG. 4A, it is possible to provide region B, which is constant at approximately the first temperature, in the vicinity of reforming catalyst downstream portion 20a. At this time, at point A at which a temperature reaches the first temperature in FIG. 4A, a conversion ratio of a passing gas does not reach the first conversion ratio (for example, 85% of the upper limit of the conversion ratio with respect to a temperature) (refer to FIG. 4B). However, as illustrated in FIG. 4B, during a period in which the raw material gas passes through region B, a reforming reaction progresses, and thus the conversion ratio of the reformed gas reaches the first conversion ratio at a point of time at which the reformed gas flows out from the outlet of reforming catalyst section 20. According to this, the amount of a hydrogen gas in a hydrogen-containing gas, which is transmitted from hydrogen generation apparatus 91, can be retained in the same amount as in the related art.

According to this, even in a case where the amount of the catalyst in reforming catalyst section 20 is greatly reduced, the amount of the hydrogen gas that is generated is retained, and a temperature rise in reforming catalyst downstream portion 20a is suppressed. According to this, it is possible to prevent combustion container 53 and reforming section container 51 from reaching a high temperature.

Returning to FIG. 6, a water supply path is connected to water supply unit 3. A raw material supply path is connected to raw material supply unit 4. A raw material gas, which is supplied from raw material supply unit 4, may be a raw material gas including an organic compound such as hydrocarbon that contains at least carbon and hydrogen elements. For example, city gas and natural gas which include methane as a main component, LPG, and the like can be used as the raw material gas.

Here, it is assumed that a gas infrastructure line of the city gas is used as a supply source of the raw material gas, and a desulfurizing unit, which removes a sulfur compound that is an odorization component in the raw material gas, is connected to the gas infrastructure line. For example, a zeolite-based adsorption remover, that adsorbs a sulfur compound that is the odorization component in city gas, can be used as the desulfurizing unit.

Furthermore, a buster pump can be used as water supply unit 3 and raw material supply unit 4. For example, it is assumed that the buster pump has a function of adjusting a flow rate of water that is supplied, and a flow rate of the raw material gas by controlling an input current pulse, an input power, and the like.

As described above, hydrogen generation apparatuses 1 and 91 of the exemplary embodiment and example include heating unit 2, the first gas flow path in which reforming catalyst section 20 is disposed, and in which the raw material gas flows into reforming catalyst section 20 and the reformed gas flows out from reforming catalyst section 20, and the second gas flow path through which a heated gas heated by heating unit 2 flows. In addition, hydrogen generation apparatuses 1 and 91 have a wall that partitions the first gas flow path and the second gas flow path, and have a configuration in which reforming catalyst section 20 is heated by using heat, which is transferred through the wall, of the heated gas. In addition, hydrogen generation apparatuses 1 and 91 include the heat transfer suppressing unit that suppresses heat transfer from the heated gas to reforming catalyst downstream portion 20a including a downstream-side end of reforming catalyst section 20 in a flow direction of the reformed gas.

According to the above-described configuration, it is possible to prevent a downstream portion, which includes the downstream-side end of reforming catalyst section 20 in a flow direction of the raw material gas, from being heated more than necessary due to heat transfer from the heated gas. Accordingly, it is possible to realize hydrogen generation apparatus 1 in which a reduction in cost is attained by reducing the amount of an expensive reforming catalyst without occurrence of a problem related to durability.

In addition, according to the above-described configuration, it is possible to allow the reformed gas to flow out in a state in which the conversion ratio of the reformed gas is close to the upper limit determined by a temperature. In addition, when performing a temperature control, it is possible to estimate the amount of the hydrogen gas that is contained in the reformed gas by using a temperature at the outlet of reforming catalyst section 20 with high accuracy. As a result, it is possible to improve control accuracy of the fuel cell system.

In addition, the heat transfer suppressing unit may be constituted by heat insulation material 40 that is provided on a surface of the wall on a heated gas side.

In addition, the heat transfer suppressing unit may be constituted by a space that is formed by a combustion exhaust gas blocking unit that is disposed between the second gas flow path and the first gas flow path downstream of the reforming catalyst section.

In addition, it is possible to employ a configuration in which heating unit 2 is a combustor, and the heated gas is the combustion exhaust gas that is generated through combustion in the combustor.

### INDUSTRIAL APPLICABILITY

As described above, the invention can exhibit a remarkable effect in which durability is excellent even when reducing the amount of the reforming catalyst. Accordingly, the invention is useful as a hydrogen generation apparatus that generates a hydrogen-containing gas through a reforming reaction of a raw material gas and water vapor by using a reforming catalyst, and the like.

### REFERENCE SIGNS LIST

- 1, 91: Hydrogen generation apparatus
- 2: Heating unit
- 3: Water supply unit
- 4: Raw material supply unit
- 5: Inner tube
- 6: Inner tube bottom plate
- 7: Intermediate tube
- 8: Intermediate tube bottom plate
- 9: Through-hole
- 12: Discharge portion
- 15: Outer tube
- 16: Outer tube bottom plate
- 17: Fuel supply unit
- 18: Combustion fan
- 19: Air supply unit
- 20: Reforming catalyst section
- 20a: Reforming catalyst downstream portion
- 21: Reforming temperature detector
- 23: Preheating unit
- 24: Modification temperature detector
- 25: Modification section
- 26: Selective oxidation section
- 30: Combustion tube
- 40: Heat insulation material
- 41: Combustion exhaust gas blocking unit
- 41a: Space
- 51: Reforming section container
- 52: Preheating unit container
- 53: Combustion container
- 140: Heat insulation material
- 231: Preheating unit heat transfer wall
- 232: Combustion exhaust gas outlet

## Claims

1. A hydrogen generation apparatus, comprising:
a heating unit (2);
a water supply unit (3) that is provided to an outer wall surface of hydrogen generation apparatus (1);
a cylindrical combustion tube (30) that is provided below the heating unit (2);
an inner tube (5) including an inner tube bottom plate (6) and disposed on an outer side of the combustion tube (30);
an intermediate tube (7) that is disposed on an outer side of the inner tube (5), the intermediate tube (7) including an intermediate bottom plate (8);
a through-hole (9) that is formed in the central portion of intermediate tube bottom plate (8);
an outer tube (15) that is disposed on an outer side of the intermediate tube (7), the outer tube (15) including an outer tube bottom plate (16);
combustion tube (30), inner tube (5), intermediate tube (7) and outer tube (15) being disposed in a substantially concentric shape;
a reforming catalyst section (20), at which a raw material gas that is supplied from a raw material supply unit (4) and water that is supplied from a water supply unit (3) are configured to be reformed to be a reformed gas, is provided between the inner tube (5) and the intermediate tube (7);
a first gas flow path in which the raw material gas that is supplied to a space between the inner tube (5) and the intermediate tube (7) flows into the reforming catalyst section (20) from an upper side of the reforming catalyst section (20), and the reformed gas that flows out from a lower end of the reforming catalyst section (20) folds back from a lower side to an upper side partway through the first gas flow path and flows out to an outside of the hydrogen generation apparatus (1, 91) through a space between the intermediate tube (7) and the outer tube (15);
a second gas flow path in which a heated gas, which is discharged from the heating unit (2) to an inner space of the combustion tube (30), gets out of the combustion tube (30), and flows through a space between the combustion tube (30) and the inner tube (5),
wherein the reforming catalyst section (20) is heated by using heat, which is transferred through the inner tube (5), of the heated gas,
a heat transfer suppressing unit (40);
a discharge port (12);
a preheating unit (23) that is provided in the space between inner tube (5) and intermediate tube (7):
a modification section (25) that is provided in the space between intermediate tube (7) and outer tube (15); modification section (25) being configured to subject carbon monoxide in the reformed gas, which is generated at reforming catalyst section (20), to a water gas shift reaction with water vapor by using a CO modification catalyst for conversion into carbon dioxide;
a selective oxidation section (26) that is provided in the space between intermediate tube (7) and outer tube (15) on a downstream side of modification section (25); selective oxidation section (26) being configured to convert carbon monoxide, which remains in a hydrogen-containing gas after the water gas shift reaction in modification section (25), into carbon dioxide with a selective oxidation catalyst by using air that is supplied from an air supply unit (19) to a hydrogen-containing gas after passing through modification section (25); and
a raw material supply unit (4) that is provided to an external wall surface of the hydrogen generation apparatus (1) on a side that is opposite to a gas folding-back portion side;
**characterized in that**
the heat transfer suppressing unit (40) is provided to suppress heat transfer from the heated gas to a reforming catalyst downstream portion (20a) that is a portion including a downstream-side end of the reforming catalyst section (20) in a flow direction of the reformed gas, a surface of the inner tube bottom plate (6) on a heating unit side, and a surface of the inner tube (5) on the heating unit side downstream of a lower end of the reforming catalyst section (20).

2. The hydrogen generation apparatus according to claim 1,
wherein the heat transfer suppressing unit (40) is a heat insulation material (40) that is provided on a surface of the inner tube (5) on the heated gas side.

3. The hydrogen generation apparatus according to claim 1 or 2,
wherein the heating unit (2) is a combustor, and
the heated gas is a combustion exhaust gas that is generated due to combustion in the combustor.

## Patentansprüche

1. Wasserstofferzeugungs-Vorrichtung, die umfasst:
eine Heiz-Einheit (2);
eine Wasserzufuhr-Einheit (3), die an einer Außenwandfläche der Wasserstofferzeugungs-Vorrichtung (1) vorhanden ist;
eine zylindrische Brennröhre (30), die unterhalb der Heiz-Einheit (2) vorhanden ist;
eine innere Röhre (5), die eine Bodenplatte (6) der inneren Röhre einschließt und an einer Außenseite der Brennröhre (30) angeordnet ist;
eine Zwischen-Röhre (7), die an einer Außenseite der inneren Röhre (5) angeordnet ist, wobei die Zwischen-Röhre (7) eine Zwischen-Bodenplatte (8) einschließt;
ein Durchgangsloch (9), das in dem Mittelabschnitt der Bodenplatte (8) der Zwischen-Röhre ausgebildet ist;
eine äußere Röhre (15), die an einer Außenseite der Zwischen-Röhre (7) angeordnet ist, wobei die äußere Röhre (15) eine Bodenplatte (16) der äußeren Röhre einschließt;
wobei Brennröhre (30), innere Röhre (5), Zwischen-Röhre (7) und äußere Röhre (15) in einer im Wesentlichen konzentrischen Form angeordnet sind;
einen Reformierkatalysator-Abschnitt (20), an dem ein von einer Rohstoffzufuhr-Einheit (4) zugeführtes Rohstoff-Gas und von einer Wasserzufuhr-Einheit (3) zugeführtes Wasser zu einem reformierten Gas reformiert werden, zwischen der inneren Röhre (5) und der Zwischen-Röhre (7) vorhanden ist;
einen ersten Gas-Strömungsweg, in dem das Rohstoff-Gas, das einem Raum zwischen der inneren Röhre (5) und der Zwischen-Röhre (7) zugeführt wird, von einer oberen Seite des Reformierkatalysator-Abschnitts (20) in den Reformierkatalysator-Abschnitt (20) einströmt, und das reformierte Gas, das über ein unteres Ende des Reformierkatalysator-Abschnitts (20) ausströmt, von einer unteren Seite teilweise über den ersten Gas-Strömungsweg zu einer oberen Seite zurückströmt und zu einer Außenseite der Wasserstofferzeugungs-Vorrichtung (1, 91) durch einen Raum zwischen der Zwischen-Röhre (7) und der äußeren Röhre (15) ausströmt;
einen zweiten Gas-Strömungsweg, in dem ein erhitztes Gas, das von der Heiz-Einheit (2) in einen Innenraum der Brennröhre (30) abgeleitet wird, aus der Brennröhre (30) austritt und durch einen Raum zwischen der Brennröhre (30) und der inneren Röhre (5) strömt,
wobei der Reformierkatalysator-Abschnitt (20) unter Verwendung von Wärme des erhitzten Gases erhitzt wird, die über die innere Röhre (5) übertragen wird,
eine Einheit (40) zum Einschränken von Wärmeübertragung;
eine Ableitöffnung (12);
eine Vorheiz-Einheit (23), die in dem Raum zwischen der inneren Röhre (5) und der Zwischen-Röhre (7) vorhanden ist;
einen Modifizierungs-Teilabschnitt (25), der in dem Raum zwischen der Zwischen-Röhre (7) und der äußeren Röhre (15) vorhanden ist, wobei der Modifizierungs-Teilabschnitt (25) so ausgeführt ist, dass er Kohlenmonoxid in dem reformierten Gas, das an dem Reformierkatalysator-Abschnitt (20) erzeugt wird, unter Einsatz eines CO-Modifizierungskatalysators zur Umwandlung in Kohlendioxid einer Wassergas-Shift-Reaktion mit Wasserdampf unterzieht;
einen Teilabschnitt (26) für selektive Oxidation, der in dem Raum zwischen der Zwischen-Röhre (7) und der äußeren Röhre (15) an einer stromab liegenden Seite des Modifizierungs-Teilabschnitts (25) vorhanden ist, wobei der Teilabschnitt (26) für selektive Oxidation so ausgeführt ist, dass er Kohlenmonoxid, das in einem wasserstoffhaltigen Gas nach der Wassergas-Shift-Reaktion in dem Modifizierungs-Teilabschnitt (25) verbleibt, mit einem selektiven Oxidationskatalysator unter Verwendung von Luft, die von einer Luftzufuhr-Einheit (19) einem wasserstoffhaltigen Gas zugeführt wird, nachdem es den Modifizierungs-Teilabschnitt (25) passiert hat, in Kohlendioxid umwandelt; sowie
eine Rohstoffzufuhr-Einheit (4), die an einer Außenwandfläche der Wasserstofferzeugungs-Vorrichtung (1) an einer Seite vorhanden ist, die einer Seite eines Gas-Rücklaufabschnitts gegenüberliegt;
**dadurch gekennzeichnet, dass**
die Einheit (40) zum Einschränken von Wärmeübertragung vorhanden ist, um Wärmeübertragung von dem erhitzten Gas auf einen stromab liegenden Abschnitt (20a) des Reformierkatalysators einzuschränken, der ein Abschnitt ist, der ein Ende des Reformierkatalysator-Abschnitts (20) an der stromab liegenden Seite in einer Strömungsrichtung des reformierten Gases, eine Fläche der Bodenplatte (6) der inneren Röhre an einer Seite der Heiz-Einheit sowie eine Fläche der inneren Röhre (5) an der Seite der Heiz-Einheit stromab von einem unteren Ende des Reformierkatalysator-Abschnitts (20) einschließt.

2. Wasserstoff-Erzeugungsvorrichtung nach Anspruch 1,
wobei die Einheit (40) zum Einschränken von Wärmeübertragung ein Wärmeisoliermaterial (40) ist, das an einer Fläche der inneren Röhre (5) an der Seite des erhitzten Gases vorhanden ist.

3. Wasserstoff-Erzeugungsvorrichtung nach Anspruch 1 oder 2,
wobei die Heiz-Einheit (2) ein Brenner ist, und
das erhitzte Gas ein Verbrennungsabgas ist, das durch Verbrennung in dem Brenner entsteht.

## Revendications

1. Appareil de génération d'hydrogène, comprenant :
un module de chauffage (2) ;
un module d'alimentation en eau (3) qui est situé sur une surface de paroi extérieure d'appareil de génération d'hydrogène (1) ;
un tube de combustion cylindrique (30) qui est situé en dessous du module de chauffage (2) ;
un tube intérieur (5) comprenant une plaque de fond (6) de tube intérieur et disposé sur un côté extérieur du tube de combustion (30) ;
un tube intermédiaire (7) qui est disposé sur un côté extérieur du tube intérieur (5), le tube intermédiaire (7) comprenant une plaque de fond (8) intermédiaire ;
un trou traversant (9) qui est formé dans la partie centrale de la plaque de fond (8) de tube intermédiaire ;
un tube extérieur (15) qui est disposé sur un côté extérieur du tube intermédiaire (7), le tube extérieur (15) comprenant une plaque de fond (16) de tube extérieur ;
le tube de combustion (30), le tube intérieur (5), le tube intermédiaire (7) et le tube extérieur (15) étant disposés d'une façon sensiblement concentrique ;
une partie de catalyseur de reformage (20), au niveau de laquelle un gaz matière première qui est fourni depuis un module d'alimentation (4) de matière première et de l'eau qui est fournie depuis un module d'alimentation en eau (3) sont conçus pour être reformés en un gaz de reformage, est située entre le tube intérieur (5) et le tube intermédiaire (7) ;
un premier trajet d'écoulement de gaz dans lequel le gaz matière première qui est fourni à un espace entre le tube intérieur (5) et le tube intermédiaire (7) s'écoule dans la partie de catalyseur de reformage (20) depuis un côté supérieur de la partie de catalyseur de reformage (20), et le gaz de reformage qui s'écoule hors d'une extrémité inférieure de la partie de catalyseur de reformage (20) remonte depuis un côté inférieur vers un point intermédiaire du côté supérieur à travers le premier trajet d'écoulement de gaz et s'écoule vers un extérieur de l'appareil de génération d'hydrogène (1, 91) à travers un espace entre le tube intermédiaire (7) et le tube extérieur (15) ;
un deuxième trajet d'écoulement de gaz dans lequel un gaz chauffé, qui est évacué depuis le module de chauffage (2) vers un espace intérieur du tube de combustion (30), sort du tube de combustion (30) et s'écoule à travers un espace entre le tube de combustion (30) et le tube intérieur (5),
dans lequel la partie de catalyseur de reformage (20) est chauffée en utilisant de la chaleur, qui est transférée à travers le tube intérieur (5), du gaz chauffé,
un module de suppression de transfert de chaleur (40) ;
un orifice d'évacuation (12) ;
un module de préchauffage (23) qui est situé dans l'espace entre le tube intérieur (5) et le tube intermédiaire (7) ;
une partie de modification (25) qui est située dans l'espace entre le tube intermédiaire (7) et le tube extérieur (15) ; la partie de modification étant conçue pour soumettre du monoxyde de carbone dans le gaz de reformage, qui est généré au niveau de la partie de catalyseur de reformage (20), à une réaction de conversion du gaz en présence d'eau avec de la vapeur d'eau en utilisant un catalyseur de modification de CO pour conversion en dioxyde de carbone ;
une partie d'oxydation sélective (26) qui est située dans l'espace entre le tube intermédiaire (7) et le tube extérieur (15) sur un côté aval de la partie de modification (25) ; la partie d'oxydation sélective (26) étant configurée pour convertir du monoxyde de carbone, qui reste dans un gaz contenant de l'hydrogène après la réaction de conversion du gaz en présence d'eau dans la partie de modification (25), en dioxyde de carbone avec un catalyseur d'oxydation sélective en utilisant de l'air qui est fourni par un module d'alimentation en air (19) à un gaz contenant de l'hydrogène après passage à travers la section de modification (25) ; et
un module d'alimentation en matière première (4) qui est situé sur une surface de paroi extérieure de l'appareil de génération d'hydrogène (1) sur un côté qui est à l'opposé d'un côté de portion de remontée de gaz ;
**caractérisé en ce que**
le module de suppression de transfert de chaleur (40) sert à supprimer un transfert de chaleur du gaz chauffé vers une partie aval (20a) de catalyseur de reformage qui est une partie comprenant une extrémité côté aval de la partie de catalyseur de reformage (20) dans un sens d'écoulement du gaz de reformage, une surface de la plaque de fond (6) de tube intérieur sur un côté module de chauffage et une surface du tube intérieur (5) du côté module de chauffage en aval d'une extrémité inférieure de la partie de catalyseur de reformage (20).

2. Appareil de génération d'hydrogène selon la revendication 1,
dans lequel le module de suppression de transfert de chaleur (40) est un matériau d'isolation thermique (40) qui est situé sur une surface du tube intérieur (5) du côté du gaz chauffé.

3. Appareil de génération d'hydrogène selon la revendication 1 ou 2,
dans lequel le module de chauffage (2) est un appareil à combustion, et
le gaz chauffé est un gaz d'échappement de combustion qui est généré suite à une combustion dans l'appareil à combustion.
